(19) Europäisches Patentamt
European Patent Office
Office européen des brevets

(11) **EP 1 418 101 B1**

(12) **EUROPÄISCHE PATENTSCHRIFT**

(45) Veröffentlichungstag und Bekanntmachung des Hinweises auf die Patenterteilung:
**11.04.2012 Patentblatt 2012/15**

(21) Anmeldenummer: **03024301.8**

(22) Anmeldetag: **24.10.2003**

(51) Int Cl.:
*B60T 1/08* (2006.01)　　　　*B60T 10/00* (2006.01)
*B60T 13/58* (2006.01)　　　　*B60T 8/00* (2006.01)
*B60T 1/06* (2006.01)　　　　*B60T 10/02* (2006.01)

(54) **Verfahren und Vorrichtung zur Steuerung der Bremskraft an einem Kraftfahrzeugrad**

Procedure and apparatus for controlling the braking force on a vehicle wheel

Procédé et dispositif pour la régulation de la force de freinage sur une roue d'un véhicule

(84) Benannte Vertragsstaaten:
**DE FR IT NL SE**

(30) Priorität: **06.11.2002 DE 10251633**

(43) Veröffentlichungstag der Anmeldung:
**12.05.2004 Patentblatt 2004/20**

(73) Patentinhaber: **MAN Truck & Bus AG**
**80995 München (DE)**

(72) Erfinder:
• **Franke, Olaf, Dipl.-Ing.**
**80935 München (DE)**
• **Teuchert, Stefan, Dipl.-Ing.**
**82110 Germering (DE)**

(56) Entgegenhaltungen:
EP-A- 0 974 505　　DE-A- 4 446 085
DE-A- 4 446 109　　DE-A- 10 057 089
US-A- 5 946 984　　US-A1- 2002 152 014

**Beschreibung**

Die Erfindung betrifft ein Verfahren und eine Vorrichtung zur Steuerung der Bremskraft an einem Kraftfahrzeugrad, bei dem der Antriebsstrang geöffnet und wieder geschlossen wird und das Bremsmoment einer primären Dauerbremse eingestellt wird.

Es ist bekannt, die Geschwindigkeit eines Kraftfahrzeugs mit Hilfe einer primären Dauerbremse, z.B. eines hydrodynamischen Retarders auf eine konstante Geschwindigkeit zu regeln (DE 43 13 685 A1). Dabei wird die gewünschte konstante Fahrgeschwindigkeit als Führungsgröße durch Betätigung eines Handhebels vorgegeben. Das Bremsmoment des Retarders wird durch Änderung des Füllungsgrades des Retarders eingestellt. Wenn während der Bremsung mittels der primären Dauerbremse (Primär-Retarder) in einen kleineren Gang geschaltet wird, kommt es nach Abschluss des Schaltvorgangs beim Einkuppeln zu einem starken Rucken. Dies resultiert aus der höheren Übersetzung nach dem Schaltvorgang, welche zu einer vergrößerten Bremskraft am Rad führt. Zum anderen führt das höhere Drehmoment des Retarders durch die höhere Betriebsdrehzahl zu einer erhöhten Bremskraft am Rad. Bei Fahrzeugen, insbesondere Nutzfahrzeugen mit infolge der Zuladung hoher Gesamtmasse wird die große Bremskraft unmittelbar nach dem Schalten in aller Regel in vollem Umfang benötigt, wobei das Rucken vom Fahrzeuginsassen wenig gespürt wird. Bei Fahrzeugen mit geringer Gesamtmasse, beispielsweise leeren Kraftfahrzeugen wirkt sich das Rucken nach dem Einkuppeln sehr stark aus und kann insbesondere auf den Fahrer des Fahrzeugs überraschend wirken. Zudem kann die hohe Bremskraft, insbesondere bei glatter Fahrbahn zur Blockierung der mit dem Antriebsstrang verbundenen Räder führen.

Aufgabe der Erfindung ist es daher, ein Verfahren und eine Vorrichtung der eingangs genannten Art zu schaffen, bei welcher ein möglichst ruckfreies (ruckarmes) Zuschalten der Dauerbremse nach dem Schalten von einem Gang des Kraftfahrzeugs in einen anderen Gang, insbesondere beim Schalten von einem größeren in einen kleineren Gang erreicht wird, wobei die Fahrzeugmasse und die Antriebsstrangübersetzung berücksichtigt werden.

Diese Aufgabe wird erfindungsgemäß beim Verfahren durch das Kennzeichen des Anspruches 1 und bei der Vorrichtung durch das Kennzeichen des Patentanspruches 3 erreicht.

Dadurch, dass zwei verschiedene zulässige Rucke im Rechner abgelegt sind und die Zustellung der Bremskraft am Rad durch die Dauerbremse über ihren Bremsmomentanstieg unter Berücksichtigung der jeweiligen Gesamtübersetzung des Antriebsstranges und der Gesamtmasse des Fahrzeugs, so erfolgt, dass die zulässigen Rucke eingehalten werden, ist ein ruckarmes und dennoch relativ schnelles Zustellen der Bremskraft am Rad möglich.

Durch das Bremsen, abhängig von den zulässigen Rucken, ist das Bremsverhalten des Fahrzeugs bei vollem oder bei teilbeladenem oder bei leerem Fahrzeug gleich.

Die vorgegebenen zulässigen Rucke sind Führungsgröße für die Zustellung der Dauerbremse(n).

Wenn weiterhin die Bremskraft durch einen Bremsomat oder ein Bedienorgan, wie z. B. einen Lenkstockschalter, nach oben hin begrenzt bzw. die maximal mögliche Bremskraft nicht benötigt wird, wird bis zur geforderten Bremskraft bzw. Bremskraftstufe nach den zulässigen Rucken oder dem ersten zulässigen Ruck, falls die Bremskraft nur im unteren Bereich gefordert ist, eingestellt.

Beim Öffnen des Antriebsstranges mittels der Fahrzeugkupplung wird der letzte Wert der Bremskraft am Rad, die aus dem primären Dauerbremsmoment berechnet wird, gespeichert. Nach dem Wiederschließen des Antriebsstranges durch Einrücken der Fahrzeugkupplung wird ein erster Bremskraftgradient durch Steuerung der Dauerbremse, insbesondere des Primärretarders unter Berücksichtigung der Fahrzeugmasse und der Antriebsstrangübersetzung eingestellt, bis der letzte, gespeicherte Wert der Bremskraft am Rad wieder erreicht wird. Anschließend wird ein zweiter Bremskraftgradient durch eine geeignete Steuerung der Dauerbremse unter Berücksichtigung der Antriebsstrangübersetzung eingestellt, welcher weniger steil, d.h. flacher als der erste Bremskraftgradient ist.

Dadurch erreicht man, dass die am Kraftfahrzeugrad wirkende Bremskraft, welche unmittelbar vor dem Schaltvorgang gewirkt hat, nach dem Einkuppeln wieder sehr schnell durch den steilen ersten Bremskraftgradienten zugestellt wird. Da der Fahrer auf die entsprechende vor dem Schaltvorgang wirkende Verzögerung eingestellt ist, wirkt sich diese rasche Zustellung der Bremskraft nicht unangenehm aus. Die nach der Schaltung zusätzlich verfügbare Bremskraft wird durch die Dauerbremse langsam, d.h. mit dem weniger steilem Bremskraftgradienten zugestellt, so dass der Fahrer durch die entsprechende Erhöhung der Bremskraft nicht überrascht wird und eine Überbremsung rechtzeitig verhindern kann.

Der Ruck ist definiert durch die zeitliche Ableitung der Beschleunigung a. Der Ruck ist somit die dritte zeitliche Ableitung des Weges.

$$\text{Ruck} = \frac{\Delta a}{\Delta t} \qquad\qquad (1)$$

Um den Ruck auf einen Maximalwert zu begrenzen, muss der Gradient der negativen Fahrzeugbeschleunigung a bzw. der Fahrzeugabbremsung a auf einen Maximalwert begrenzt werden. Die Beschleunigung a ist der Quotient aus Bremskraft $F_R$ am Rad und Fahrzeuggesamtmasse m.

$$a = \frac{F_R}{m} \qquad\qquad (2)$$

Die Fahrzeugmasse m ist vorgegeben. Sie kann durch Schätzung oder durch Wägung oder Berechnung (z. B. DE 197 28 867 A1) bestimmt werden. Damit ergibt sich eine direkte Abhängigkeit des Rucks von der zeitlichen Änderung der Bremskraft $F_R$ am Rad.

$$Ruck = \frac{\Delta a}{\Delta t} = \frac{\Delta F_R}{\Delta t}\frac{1}{m} \quad \Rightarrow \quad \frac{\Delta F_R}{\Delta t} = Ruck \cdot m \qquad\qquad (3)$$

Um den gewünschten maximalen Ruck einzuhalten, ist daher nur der Gradient der Bremskraft auf einen von der Fahrzeugmasse abhängigen Maximalwert zu begrenzen. Die Bremskraft kann aus den Drehmomenten bzw. Bremsmomenten der Dauerbremse (Primärretarder) ermittelt werden. Bei Anwendung des erfindungsgemäßen Verfahrens ist die Bereitstellung der Retarderdrehzahl ω und der Fahrzeuggeschwindigkeit v für die vom Rechner, insbesondere Bordrechner durchzuführende Bestimmung des erforderlichen Bremsmomentgradienten der Dauerbremse ausreichend, wie im Einzelnen noch erläutert wird.

Die Bremsleistung P des Fahrzeugs ergibt sich sowohl aus dem Produkt der Retarderdrehzahl ω und dem Bremsmoment M des Retarders als auch aus der Fahrzeuggeschwindigkeit v und der Bremskraft $F_R$ am Rad.

$$P = M \cdot \omega = F_R \cdot v \qquad\qquad (4)$$

Hieraus ergibt sich als Bremskraft $F_R$ am Rad

$$F_R = M \cdot \frac{\omega}{v} \qquad\qquad (5)$$

Das Bremsmoment M des Retarders ergibt sich aus

$$M = F_R \cdot \frac{v}{\omega} \qquad\qquad (6)$$

Das Verhältnis ω zu v bzw. v zu ω stellt die Übersetzung des gesamten Antriebsstrangs inklusive des Umrechnungsfaktors von Drehmoment auf Drehzahl und damit das Verhältnis von Drehzahl zu Geschwindigkeit dar. Gleichzeitig kann demzufolge aus dem maximalen Bremskraftgradienten am Rad ein maximaler Bremsmomentgradient an der Dauerbremse berechnet werden.

$$\frac{\Delta M}{\Delta t} = \frac{\Delta F_R}{\Delta t} \cdot \frac{v}{\omega} = \frac{\Delta a}{\Delta t} \cdot m \cdot \frac{v}{\omega} \qquad\qquad (7)$$

Um für unterschiedliche Fahrzeugarten wie Omnibusse, Lastkraftwagen und andere Nutzfahrzeuge, die beiden geeigneten Bremskraftgradienten zu bestimmen, werden Versuche durchgeführt, mit denen die beiden zugeordneten Maximalwerte der Rucke $\left(\dfrac{\Delta a}{\Delta t}\right)_1$ und $\left(\dfrac{\Delta a}{\Delta t}\right)_2$ festgelegt werden. Diese Maximalwerte der beiden Rucke werden für alle Fahrzeuge, welche zur selben Fahrzeugart gehören, bei der Bestimmung der maximalen, am Rad wirkenden Bremskraftgradienten verwendet.

Anhand der Figuren wird an Ausführungsbeispielen die Erfindung noch näher erläutert.

Es zeigt:

Fig. 1     ein Funktionsbild eines Ausführungsbeispiels;

Fig. 2     eine graphische Darstellung zur Erläuterung der Funktion des in Fig. 1 dargestellten Ausführungsbeispiels;

Fig. 3     eine grafische Darstellung der zwei Rucke, welche für bestimmte Fahrzeugarten durch Versuche festgelegt werden;

Figur 4     eine weitere Anwendungsform nach einem ABS-Fall.

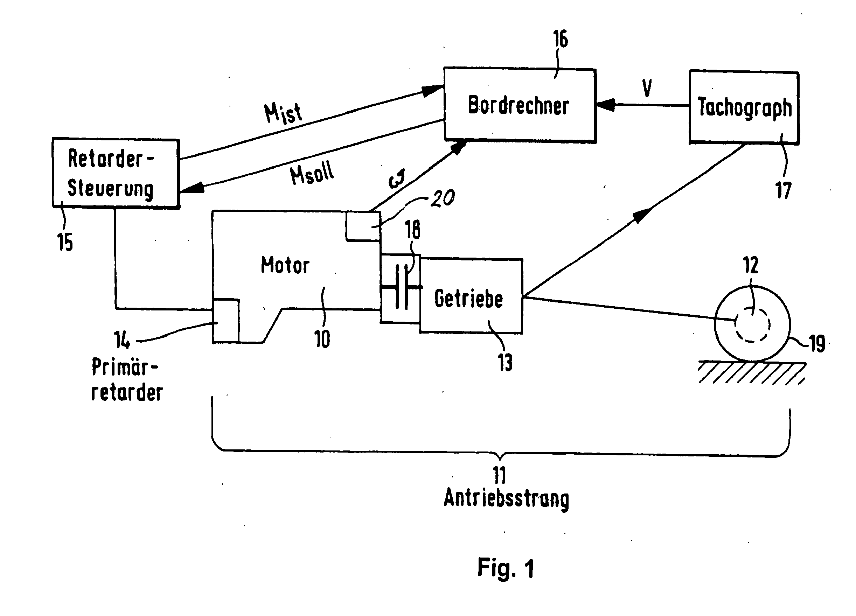

Beim Ausführungsbeispiel der Figur 1 wirkt eine als Primärretarder ausgebildete Dauerbremse 14 über einen Antriebsstrang 11 bremsend auf ein Kraftfahrzeugrad 19. Der Antriebsstrang 11 enthält in bekannter Weise einen Fahrzeugmotor 10, eine Kupplung (Trennkupplung) 18, insbesondere Reibungskupplung, ein Getriebe 13 und eine Radachse 12, welche mit dem Getriebe verbunden ist und die Antriebs- und Bremskräfte des Antriebsstranges 11 auf das Kraftfahrzeugrad 19 überträgt.

Für die Dauerbremse 14 ist eine Retardersteuereinrichtung 15 vorgesehen, welche mit einem Bordrechner 16 verbunden ist. Der Bordrechner 16 gibt den Sollwert für das Bremsmoment, welches von der Dauerbremse 14 erzeugt werden soll, der Retardersteuereinrichtung 15 vor und vergleicht diesen Soll-Wert mit dem Ist-Wert des von der Dauerbremse 14 erzeugten Bremsmomentes. Mit dem Bordrechner 16 ist ferner ein Tachograph 17 verbunden, der ein Messsignal für die Fahrzeuggeschwindigkeit v liefert. Der Tachograph 17 ist zur Gewinnung dieses Messwertes mit dem Getriebe 13 verbunden. Ferner ist ein Drehzahlgeber 20 mit dem Bordrechner 16 verbunden, welcher einen Messwert für die Motor- bzw. Retarderdrehzahl $\omega$ liefert.

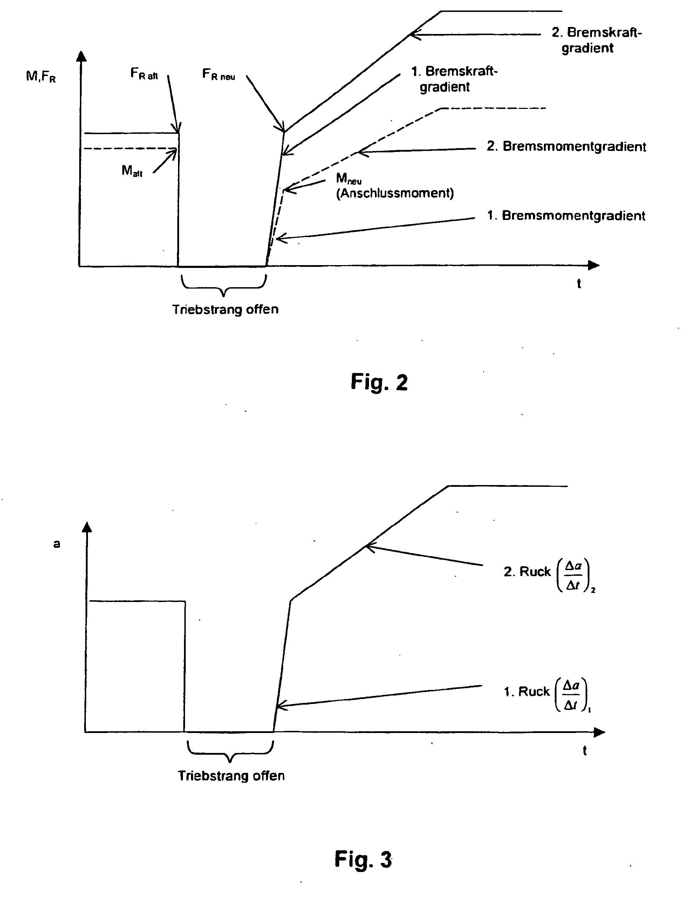

Anhand der Figuren 2 und 3 wird die Arbeitsweise des in Figur 1 dargestellten Ausführungsbeispiels noch näher erläutert.

In der Figur 2 sind der Verlauf der am Kraftfahrzeugrad 19 wirkenden Bremskraft mit ausgezogenen Linien und der Verlauf des entsprechenden von der Dauerbremse 14 erzeugten Bremsmomentes strichliert dargestellt.

Wenn mittels der Kupplung 18 beim Schalten von einem höheren Gang auf einen niedrigeren Gang der Antriebsstrang 11 geöffnet wird, ermittelt der Bordrechner 16 das letzte unmittelbar vor dem Öffnen des Antriebsstranges vorliegende Bremsmoment $M_{alt}$ (Figur 2) und berechnet hieraus anhand der Gleichung 5 die zuletzt am Kraftfahrzeugrad 19 wirkende Bremskraft, welche in der Figur 2 mit $F_{Ralt}$ bezeichnet ist. Dieser Wert der Bremskraft wird im Bordrechner 16 gespeichert. Nach dem Schalten wird der Antriebstrang 11 durch Einrücken der Kupplung 18 wieder geschlossen und aufgrund der veränderten Fahrzeuggeschwindigkeit $V_{neu}$ und der geänderten Motor- bzw. Retarderdrehzahl $\omega_{neu}$ ein neues Anschlussbremsmoment $M_{neu}$, welches dem vor der Schaltung zuletzt dem Kraftfahrzeugrad 19 wirksamen Bremskraftwert $F_{Ralt}$ entspricht, gemäß Gleichung 6, wie folgt errechnet:

$$M_{neu} = F_{Ralt}\ \frac{V_{neu}}{\omega_{neu}} \tag{8}$$

Der Wert dieses Anschlussbremsmomentes bewirkt mit der neuen Übersetzung $\dfrac{V_{neu}}{\omega_{neu}}$ des Antriebsstrangs 11 eine Bremskraft $F_{Rneu}$ am Kraftfahrzeugrad, die der Bremskraft $F_{Ralt}$ am Kraftfahrzeugrad vor der Schaltung entspricht.

Hierdurch wird innerhalb kurzer Zeit das notwendige gemäß Gleichung 8 berechnete Anschlussbremsmoment $M_{neu}$ durch die Dauerbremse 14 erreicht. Über den Antriebsstrang 11 wirkt am Kraftfahrzeugrad 19 eine Anschlussbremskraft $F_{Rneu}$, welche gleich dem letzten Wert der am Rad wirkenden Bremskraft $F_{Ralt}$ ist.

Durch Vergleich der von der Retardersteuerung 15 gelieferten Bremsmoment-Istwerte mit den vom Bordrechner 16 vorgegebenen Bremsmoment-Sollwerten wird gewährleistet, dass das von der Dauerbremse 14 gelieferte Bremsmoment kurzzeitig nach dem Schließen des Antriebsstranges 11 eine Bremskraft am Kraftfahrzeugrad 19 bewirkt, die der gewünschten Anschlussbremskraft $F_{Rneu}$ entspricht.

Es ist auch möglich, die am Kraftfahrzeugrad 19 wirkende Bremskraft $F_R$ zu messen und als $F_{Ralt}$ zu speichern. Durch den oben beschriebenen Vergleich lässt sich dann ebenfalls die Anschlussbremskraft $F_{Rneu}$ nach dem Schaltvorgang erreichen und die Phase des ersten Bremsmomentgradienten und ersten Bremskraftgradienten beenden.

Nach Erreichen des Anschlussbremsmomentes $M_{neu}$ wird das weiter verfügbare Bremsmoment der Dauerbremse (Primärretarders) 14 mit einem zweiten Bremsmomentgradienten zugestellt, der vom Bordrechner aus dem zweiten Ruck berechnet wird.

Der Bremskraftgradient am Rad, das ist die Änderung der Bremskraft am Rad pro Zeiteinheit, muss so gesteuert werden, dass sich ein möglichst ruckarmer Bremsvorgang nach dem Einkuppeln ergibt. Dies wird durch die Vorgabe des ersten zulässigen Ruckes, der im Bordrechner 16 abgelegt ist, erreicht.

Dabei gibt der Bordrechner 16 entsprechende Bremsmomente $M_{Soll}$ an die Retardersteuerung 15 vor, die aus der Vorgabe der Änderung der Beschleunigung $\Delta a$ je Zeiteinheit $\Delta t$ (Ruck) durch den Retarder eingehalten werden sollen. Die Beschleunigung $\Delta a$ kann der Bordrechner beispielsweise aus der Änderung, der Drehzahländerung $\Delta \omega$ des Retarders pro Zeiteinheit und der momentanen Antriebsstrangeinstellung (z. B. über die Geschwindigkeit v) errechnen, oder direkt aus der Geschwindigkeitsänderung $\Delta v$.

Der zweite vorgegebene Ruck ist wesentlich geringer als der erste vorgegebene Ruck. Damit ergibt sich unter Berücksichtigung der Fahrzeugmasse m der zweite, flachere Bremskraftgradient und im weiteren unter Berücksichtigung

der Antriebsstrangübersetzung. $\cdot \dfrac{v}{\omega}$ der zweite flachere Bremsmomentgradient, wie aus Fig. 2 zu sehen ist.

Ein in der Figur 2 dargestellter Bremskraftverlauf mit den beiden Bremskraftgradienten wird nach dem Wiederschließen des Antriebsstranges 11 mit einem nach Fig. 3 ersten zulässigen Ruck $\left(\dfrac{\Delta a}{\Delta t}\right)_1$, aus welchem unter Berücksichtigung des Antriebsstranges, der erste Bremskraftgradient in Figur 2 erreicht wird und einem zweiten Ruck $\left(\dfrac{\Delta a}{\Delta t}\right)_2$, welcher mit dem zweiten Bremskraftgradienten in Figur 2 erreicht wird. Die beiden Rucke sind in der Figur 3 dargestellt. Die optimalen bzw. zulässigen Werte der beiden Rucke $\left(\dfrac{\Delta a}{\Delta t}\right)_1$ und $\left(\dfrac{\Delta a}{\Delta t}\right)_2$ werden durch Versuche für die jeweiligen Fahrzeugarten wie Omnibusse, Lastkraftwagen und dergleichen festgelegt. Diese beiden Rucke sind fest, vorzugsweise im Bordrechner 16 als Ausgangsparameter für die beschriebene Berechnung und somit auch als Grenzwerte für die Rucke gespeichert.

Hierdurch ist gewährleistet, dass bei einem Fahrzeug mit hoher Gesamtmasse die Bremskräfte am Rad schnell und bei einem leeren Fahrzeug entsprechend langsamer aufgebaut werden. Die Übersetzung des Antriebsstranges wird in der Weise berücksichtigt, dass bei einem großen Gang (lange Übersetzung) das Bremsmoment des Primärretarders schnell zugestellt wird und beim einem kleinen Gang (kurze Übersetzung) wesentlich langsamer zugestellt wird. Bei einem kleinen Gang ergibt sich aus dem gleichen primären Bremsmoment des Retarders eine wesentliche größere Bremskraft am Rad. Die auf zulässige Werte begrenzten Rucke ergeben somit immer entsprechende Zustellgradienten der Bremskraft am Kraftfahrzeugrad unter Berücksichtigung der Fahrzeugmasse m und der Antriebsstrangeinstellung.

Die erfindungsgemäße Einstellung des Bremsmomentgradienten kann für alle stufenlos regelbaren primären Dauerbremsen vor der Kupplung 18 (Trennkupplung), beispielsweise Wasserpumpenretarder am Motor, herkömmliche Primärretarder, wie hydraulische Wandlerschaltkupplungen mit Retarderfunktion und stufenlos geregelte Motorbremsen Verwendung finden, wenn diese mit einem Schaltgetriebe, wie Handschaltgetriebe mit und ohne Komfort-Shift, oder automatisch schaltendem Getriebe kombiniert sind. Bei mehreren primären Dauerbremsen bezieht sich die Einstellung des Bremsmomentgradienten zum ruckarmen Schaltvorgang auf das Summenmoment der aktivierten Dauerbremsen. Das notwendige Bremsmoment wird hierzu in geeigneter Weise auf die Dauerbremsen verteilt.

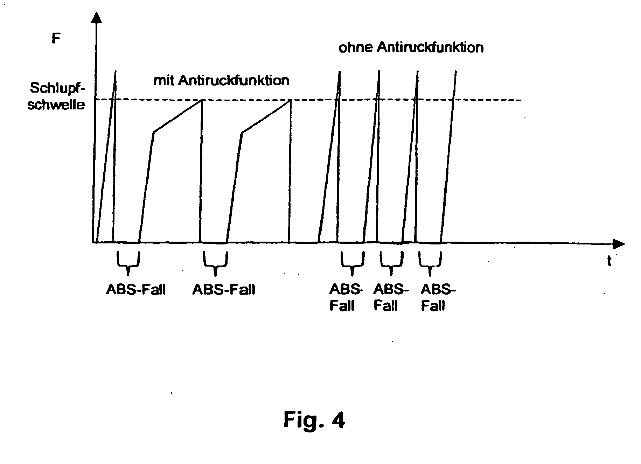

Anhand der Figur 4 wird ein weiterer Anwendungsfall, nämlich nach einem ABS-Fall erläutert. Hier wird die Anschlusskraft $F_{Rneu}$ so gewählt, dass sie etwas unterhalb die vorgegebene Schlupfkraft bzw. Schlupfschwelle erreicht. Die Bremskraftpulse steigen zunächst mit einem steilen Gradienten bis zur Anschlusskraft unterhalb der Schlupfschwelle an und erhöhen sich mit einem flachen Gradienten bis zur Schlupfschwelle hin. Dies wiederholt sich nach jedem ABS-Fall, wie aus der Figur 4 zu ersehen ist. Hierdurch erreicht man eine Erhöhung der Bremswirkung während einer ABS-Bremsung.

**Bezugszeichenliste**

10    Fahrzeugmotor

11    Antriebsstrang

12    Radachse

13    Getriebe

14    Dauerbremse (Primärretarder)

15    Retardersteuerung

16    Rechner (Bordrechnert)

17    Tachograph

18    Kupplung (Trennkupplung, Reibungskupplung)

19    Kraftfahrzeugrad

20    Drehzahlgeber

**Patentansprüche**

1. Verfahren zur Steuerung der Bremskraft an einem Kraftfahrzeugrad (19) eines Nutzfahrzeugs, bei dem mit mindestens einer primären Dauerbremse (14) rechnergestützt unterschiedliche Bremsmomente kontinuierlich eingestellt werden, mit einem Schaltstufengetriebe (13), das manuell oder automatisch geschaltet wird und mit einer Reibungskupplung (18) der Antriebsstrang (11) geöffnet oder geschlossen wird, **dadurch gekennzeichnet, dass** beim Öffnen des Antriebsstranges (11) der letzte Wert der Bremskraft (FRalt) am Rad, der aus dem entsprechenden Bremsmoment (Malt) der primären Dauerbremse (14) berechnet wird, gespeichert wird und nach dem Wiederschließen des Antriebsstranges ein erster Bremsmomentgradient an der primären Dauerbremse (14) eingestellt wird, der sich aus dem zulässigen ersten Ruck $(\Delta a/\Delta t)_1$ der Gesamtmasse m des Fahrzeugs und der Gesamtübersetzung v/ω des Antriebsstranges (11) berechnet, der einen ersten gewünschten Bremskraftgradienten am Kraftfahrzeugrad (19) zur Folge hat, solange eingestellt wird bis eine dem letzten Wert der Bremskraft am Rad (FRalt) entsprechende Anschlussbremskraft (FRneu) erreicht wird und dass dann ein zweiter Bremsmomentgradient an der primären Dauerbremse (14) eingestellt wird, der sich aus dem zulässigen zweiten Ruck $(\Delta a/\Delta t)_2$, der Gesamtmasse m des Fahrzeugs und der Gesamtübersetzung v/ω des Antriebsstranges (11) berechnet und welcher einen zweiten weniger steilen Bremskraftgradienten am Rad ergibt.

2. Verfahren nach einem der Anspruch 1, **dadurch gekennzeichnet, dass** die beiden Bremskraftgradienten aus zwei zulässigen, für eine jeweilige Fahrzeugart durch Versuche bestimmte, Ruck-Maximalwerten berechnet werden.

3. Vorrichtung zur Steuerung der Bremskraft an einem Kraftfahrzeugrad (19) eines Nutzfahrzeugs mit wenigstens einer primären Dauerbremse (14), deren Bremsmoment auf das Rad wirkt, einen Rechner, insbesondere Bordrechner, welcher unterschiedliche Bremsmomente der primären Dauerbremse (14) einstellt, einem manuell oder automatisch schaltbaren Schaltstufengetriebe (13) und einer Trennkupplung (18) zum Öffnen oder Schließen eines Antriebsstranges (11) des Fahrzeugs, **dadurch gekennzeichnet, dass** zweifaches unterschiedliches, zulässiges Rucken $(\Delta a/\Delta t)_1$ und $(\Delta a/\Delta t)_2$ vorgegeben ist und das Bremsmoment der primären Dauerbremse (14) durch den Rechner, insbesondere Bordrechner (16) so steuerbar ist, dass zwei unterschiedlich steile, am Rad (19) wirkende Bremskraftgradienten erreichbar sind, wobei nach Öffnen und Wiederschließen des Antriebsstranges (11) aus dem ersten zulässigen Ruck ein erster steiler Bremskraftgradient erzielbar ist, bis am Rad (19) wieder eine Bremskraft erreichbar ist, die kurz vor dem Öffnen des Antriebsstranges (11) vorliegt und anschließend aus dem zweiten zulässigen Ruck ein zweiter weniger steiler Bremsmomentgradient einstellbar ist, der einen weniger steilen Bremskraftgradienten am Rad (19) ergibt, wobei der erste und der zweite Bremsmomentgradient aus dem jeweils zugehörigen ersten bzw. zweiten Ruck, der Gesamtmasse des Fahrzeugs und der Gesamtübersetzung des Antriebsstrangs (11) berechenbar ist.

**Claims**

1. Method for controlling the braking force on a motor vehicle wheel (19) of a utility vehicle, in which varying braking torques can be set continuously in a computer-assisted manner by means of at least one primary retarder (14), having a multi-stage shift gearbox (13) in which gear shifts are performed manually or automatically, and the drive train (11) is opened or closed by means of a friction clutch (18), **characterized in that**, during the opening of the drive train (11), the most recent value of the braking force (FRalt) at the wheel as calculated from the corresponding braking torque (Malt) of the primary retarder (14) is stored and, after the drive train is closed again, there is set at the primary retarder (14) a first braking torque gradient, calculated from the admissible first jerk $(\Delta a/\Delta t)_1$, the overall mass m of the vehicle and the overall transmission ratio v/w of the drive train (11), which results in a first desired braking force gradient at the motor vehicle wheel (19), said first braking torque gradient being set until a follow-up braking force (FRneu) corresponding to the most recent value of the braking force at the wheel (FRalt) is attained, and **in that** there is then set at the primary retarder (14) a second braking torque gradient, calculated from the admissible second jerk $(\Delta a/\Delta t)_2$, the overall mass m of the vehicle and the overall transmission ratio v/ω of the drive train (11), which yields a second, less steep braking force gradient at the wheel.

2. Method according to Claim 1, **characterized in that** the two braking force gradients are calculated from two admissible jerk maximum values determined for a respective vehicle type by testing.

3. Device for controlling the braking force on a motor vehicle wheel (19) of a utility vehicle, having at least one primary retarder (14) whose braking torque acts on the wheel, having a computer, in particular on-board computer, which sets varying braking torques of the primary retarder (14), having a multi-stage shift gearbox (13) in which gear shifts can be performed manually or automatically, and having a separating clutch (18) for opening or closing a drive train (11) of the vehicle, **characterized in that** two different admissible jerks $(\Delta a/\Delta t)_1$ and $(\Delta a/\Delta t)_2$ are predefined, and the braking torque of the primary retarder (14) can be controlled by the computer, in particular on-board computer (16), such that two braking force gradients of different steepness which act on the wheel (19) can be attained, wherein after the drive train (11) has been opened and closed again, from the first admissible jerk there can be attained a first, steep braking force gradient until a braking force present shortly before the opening of the drive train (11) can be attained again at the wheel (19), and subsequently from the second admissible jerk there can be set a second, less steep braking torque gradient which yields a less steep braking force gradient at the wheel (19), wherein the first and the second braking torque gradient can be calculated from the respectively associated first or second jerk, the overall mass of the vehicle and the overall transmission ratio of the drive train (11).

**Revendications**

1. Procédé pour commander la force de freinage sur une roue de véhicule automobile (19) d'un véhicule utilitaire, selon lequel différents moments de freinage sont continuellement réglés avec une assistance par ordinateur avec au moins un frein à régime continu primaire (14) et selon lequel la chaîne motrice (11) est ouverte ou fermée avec une boîte de vitesses (13), dont les rapports sont changés manuellement ou automatiquement, et avec un accouplement à friction (18), **caractérisé en ce que** lors de l'ouverture de la chaîne motrice (11), la dernière valeur de la force de freinage (FRalt) sur la roue, laquelle est calculée à partir du moment de freinage (Malt) correspondant du frein à régime continu primaire (14), est mémorisée et après la refermeture de la chaîne motrice, un premier gradient de moment de freinage est réglé sur le frein à régime continu primaire (14), lequel est calculé à partir du premier à-coup admissible $(\Box a/\Box t)_1$ de la masse totale m du véhicule et de la démultiplication totale v/ω de la chaîne motrice (11), lequel a pour conséquence un premier gradient de force de freinage souhaité sur la roue de véhicule automobile (19), lequel est réglé jusqu'à ce qu'une force de freinage suivante (FRneu) correspondant à la dernière valeur de la force de freinage sur la roue (FRalt) soit atteinte et **en ce qu'**un deuxième gradient de moment de freinage est réglé sur le frein à régime continu primaire (14), lequel est calculé à partir du deuxième à-coup admissible

$(\Box a/\Box t)_2$ de la masse totale m du véhicule et de la démultiplication totale $v/\omega$ de la chaîne motrice (11) et lequel produit un deuxième gradient de force de freinage, moins raide, sur la roue.

2. Procédé selon la revendication 1, **caractérisé en ce que** les deux gradients de force de freinage sont calculés à partir de deux valeurs maximales admissibles de l'à-coup déterminées par des essais pour un modèle de véhicule correspondant.

3. Dispositif pour commander la force de freinage sur une roue de véhicule automobile (19) d'un véhicule utilitaire, comprenant au moins un frein à régime continu primaire (14) dont le moment de freinage agit sur la roue, un ordinateur, notamment un ordinateur de bord, qui calcule différents moments de freinage du frein à régime continu primaire (14), une boîte de vitesses (13) dont les rapports peuvent être changés manuellement ou automatiquement et un accouplement de séparation (18) pour ouvrir ou fermer une chaîne motrice (11) du véhicule, **caractérisé en ce que** deux à-coups admissibles $(\Box a/\Box t)_1$ et $(\Box a/\Box t)_2$ différents sont prédéfinis et le moment de freinage du frein à régime continu primaire (14) peut être commandé par l'ordinateur, notamment l'ordinateur de bord (16), de telle sorte qu'il est possible d'obtenir deux gradients de force de freinage à pentes différentes agissant sur la roue (19), un premier gradient de force de freinage plus raide pouvant être obtenu après l'ouverture et la refermeture de la chaîne motrice (11) à partir du premier à-coup admissible jusqu'à pouvoir atteindre de nouveau sur la roue (19) une force de freinage qui était présente juste avant l'ouverture de la chaîne motrice (11) et un deuxième gradient de moment de freinage moins raide pouvant ensuite être réglé à partir du deuxième à-coup admissible, lequel produit un gradient de force de freinage moins raide sur la roue (19), le premier et le deuxième gradient de moment de freinage pouvant être calculés respectivement à partir du premier ou du deuxième à-coup associé de la masse totale du véhicule et de la démultiplication totale de la chaîne motrice (11).

Fig. 1

Fig. 1

EP 1 418 101 B1

**Fig. 2**

**Fig. 3**

**Fig. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4313685 A1
- DE 19728867 A1